# EUROPÄISCHE PATENTSCHRIFT

(11) **EP 3 694 670 B1**
(45) Veröffentlichungstag und Bekanntmachung des Hinweises auf die Patenterteilung: **19.10.2022**
(21) Anmeldenummer: 19727345.1
(22) Anmeldetag: 27.05.2019
(51) Int. Cl.: B23F 21/10, B23F 21/12, B23F 21/06

(54) **WÄLZSCHÄLWERKZEUG**
SKIVING TOOL
OUTIL DE TAILLAGE EN DÉVELOPPANTE

(30) Priorität: 29.05.2018 DE 102018112865
(43) Veröffentlichungstag der Anmeldung: 19.08.2020
(73) Patentinhaber: Hartmetall-Werkzeugfabrik Paul Horn GmbH, 72072 Tübingen (DE)
(72) Erfinder: KANNWISCHER, Markus, 72108 Ergenzingen (DE); WAGNER, Eckhard, 72116 Moessingen (DE); MUJCIN, Ervin, 72116 Moessingen (DE)
(74) Vertreter: Witte, Weller & Partner Patentanwälte mbB
(86) Internationale Anmeldenummer: PCT/EP2019/063573
(87) Internationale Veröffentlichungsnummer: WO 2019/228945

(56) Entgegenhaltungen:
- EP-A1- 2 639 001
- EP-A2- 0 037 909
- WO-A1-2018/039118
- DE-A1-102007 015 357
- DE-U1-202009 009 518
- FR-A- 1 447 376

## Beschreibung

Die vorliegende Erfindung betrifft ein Wälzschälwerkzeug, mit einem Schaft, der sich entlang einer Längsachse des Werkzeugs erstreckt, und einem Schneidkopf, der an einem stirnseitigen Ende des Schafts angeordnet ist, wobei der Schneidkopf eine Vielzahl von umfangsseitig angeordneten Zähnen aufweist.

Ein Wälzschälwerkzeug gemäß dem Oberbegriff des Anspruchs 1 ist aus der EP 0 037 909 A2 bekannt.

Wälzschälen ist ein Verfahren zur Herstellung von Verzahnungen, welches bspw. zur Fertigung von Zahnrädern eingesetzt wird. Wälzschälen an sich ist bereits seit mehr als 100 Jahren bekannt. Eine erste diesbezügliche Patentanmeldung mit der Nr. DE 243514 geht auf das Jahr 1910 zurück. In den darauffolgenden Jahren fand das Wälzschälen lange Zeit keine größere Beachtung. Im vergangenen Jahrzehnt wurde dieses sehr alte Fertigungsverfahren zur spanenden Bearbeitung eines Werkstücks jedoch erneut aufgegriffen und findet mittlerweile vielfach Verwendung bei der Fertigung diverser Verzahnungen. Eine vergleichsweise neuere Patentanmeldung zu diesem Thema ist bspw. die WO 2012/152659 A1.

Wälzschälen wird als Alternative zum Wälzfräsen oder Wälzstoßen eingesetzt. Es ermöglicht im Vergleich zum Wälzfräsen und Wälzstoßen eine deutliche Verringerung der Bearbeitungsdauer. Zudem lässt sich eine sehr hohe Bearbeitungsqualität erzielen. Wälzschälen ermöglicht daher eine sehr produktive und gleichzeitig hochpräzise Herstellung von Verzahnungen.

Beim Wälzschälen werden das Werkstück und das Werkzeug mit gleichem Drehsinn und einem aufeinander abgestimmten (synchronisierten) Drehzahlverhältnis angetrieben. Das Werkzeug wird dabei schräg, unter einem vorbestimmten Winkel, der üblicherweise als Achskreuzwinkel bezeichnet wird, relativ zu dem Werkstück angestellt. Der Achskreuzwinkel bezeichnet den Winkel zwischen der Rotationsachse des Wälzschälwerkzeugs und der Rotationsachse des zu bearbeitenden Werkstücks. Zur Erzeugung einer Vorschubbewegung wird das Werkzeug und/oder das Werkstück zudem translatorisch bewegt. Die resultierende Relativbewegung zwischen dem Wälzschälwerkzeug und dem Werkstück ist also eine Art Schraubbewegung, die einen Drehanteil (rotatorischer Anteil) und einen Schubanteil (translatorischer Anteil) aufweist. Die Bearbeitung des Werkstücks erfolgt mit den am Schneidkopf des Wälzschälwerkzeugs umfangsseitig angeordneten Zähnen.

Der Schneidkopf oder zumindest die an diesem angeordneten Zähne sind vorzugsweise aus Hartmetall, wohingegen der Schaft des Schälwerkzeugs typischerweise aus Stahl ist. Je nach Größe des Wälzschälwerkzeugs und/oder Größe der herzustellenden Verzahnung kann das Werkzeug auch gesamthaft aus Hartmetall hergestellt sein. Ebenso ist es möglich, den Schneidkopf des Wälzschälwerkzeugs mit einzelnen Wendeschneidplatten zu bestücken, die die Zähne bilden. Ferner können Hartmetallschneiden, die die Zähne bilden, auf den Wechselkopf aufgelötet sein.

Die Spanflächen sind typischerweise an einer Oberseite der Zähne angeordnet; sie bilden das stirnseitige Ende des Schneidkopfes, welches von dem Schaft des Wälzschälwerkzeugs abgewandt ist. Typischerweise sind die Spanflächen als planare Flächen ausgestaltet. In Bezug auf die Längsachse des Wälzschälwerkzeugs sind die Spanflächen typischerweise geneigt, also nicht senkrecht zu der Längsachse angeordnet. Sie liegen daher jeweils in unterschiedlichen Ebenen. Die Zähne selbst weisen sternförmig von der Längsachse des Werkzeugs weg, wobei sich die Zähne nicht zwangsläufig exakt in Radialrichtung erstrecken müssen.

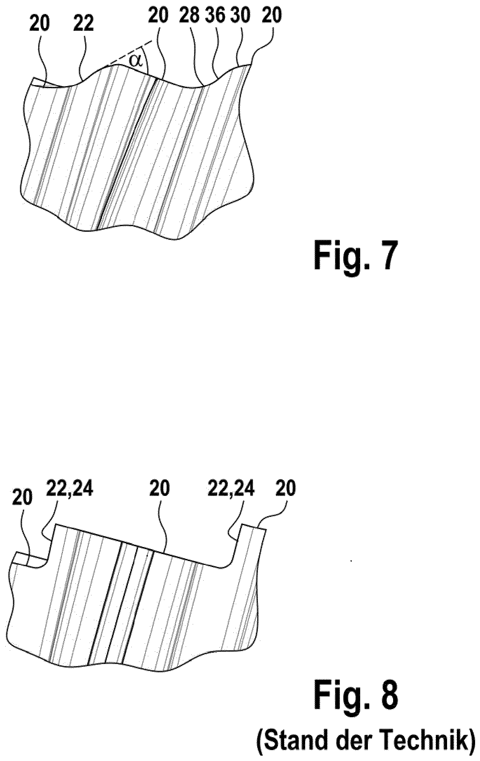

Die Spanflächen der Zähne werden typischerweise mit einer Schleifscheibe hergestellt. Hierdurch ergibt sich zwischen der Spanfläche eines Zahnes und der Spanfläche eines benachbarten Zahnes ein Absatz, welcher wie eine Art Treppenstufe aussieht. Fig. 8 zeigt einen Ausschnitt eines Schneidkopfes gemäß einem typischen Beispiel aus dem Stand der Technik. Die Darstellung in Fig. 8 ergibt sich durch Betrachtung des Schneidkopfes in einer Draufsicht aus radialer Richtung. Drei benachbarte Spanflächen sind in Fig. 8 jeweils mit der Bezugsziffer 20 gekennzeichnet. Eine Übergangsfläche, die sich beim Schleifen zwischen zwei benachbarten Spanflächen 20 ergibt, ist in Fig. 8 mit der Bezugsziffer 22 gekennzeichnet. Diese Übergangsfläche 22 weist eine planare Flanke 24 auf, welche bei denen aus dem Stand der Technik bekannten Werkzeugen typischerweise orthogonal zu den benachbarten Spanflächen 20 ausgerichtet ist. Diese orthogonale Ausrichtung ergibt sich automatisch während des Schleifprozesses, da die Schleifscheibe jeweils mit ihrer Stirnseite die Spanfläche 20 und mit ihrer Umfangsseite die Flanke 24 bearbeitet.

Bei der Herstellung einer Innenverzahnung wird das Werkstück herkömmlicherweise zunächst mittels Innenausdrehen bearbeitet. Dabei wird das Werkstück auf einen Innendurchmesser ausgedreht, welcher durch die Zahnhöhe der später hergestellten Zähne der Verzahnung bestimmt wird. Anschließend wird die Innenverzahnung mit ihren Zahnflanken und Zahnfüßen durch die Wälzschälbearbeitung hergestellt. Bei diesem Bearbeitungsablauf entsteht die Oberfläche der Zahnköpfe durch die Innenausdrehbearbeitung, wohingegen die Oberfläche der Zahnflanken und Zahnfüße durch das Wälzschälen entsteht. Als Zahnköpfe werden die Teile der Verzahnung bezeichnet, welche bei einer Innenverzahnung den kleinsten Innendurchmesser der Verzahnung bilden. Die Zahnfüße bilden bei einer Innenverzahnung dagegen den größten Innendurchmesser. Bei einer Außenverzahnung ist dies verständlicherweise genau umgekehrt. Die Zahnflanken verlaufen in beiden Fällen jeweils zwischen den Zahnköpfen und den Zahnfüßen.

Anders als in dem zuletzt dargestellten Bearbeitungsablauf ist es häufig erwünscht, auch die Zahnköpfe der Verzahnung durch die Wälzschälbearbeitung herzustellen, so dass ein Innenausdrehen entfallen kann. Der oben in Bezug auf Fig. 8 erwähnte treppenförmige Übergang zwischen benachbarten Spanflächen stellt in einem solchen Fall jedoch ein Problem dar, da sich durch diesen Übergang, insbesondere durch die orthogonal zu den benachbarten Spanflächen 20 ausgerichteten Flanken 24, eine Störkontur auf den Zahnköpfen der Verzahnung bildet. Diese Störkontur ist meist in Form eines leichten Versatzes sichtbar. Ein solcher Versatz ist unerwünscht, da er die Qualität der Verzahnung unter Umständen beeinträchtigt. Typischerweise müssen die Zahnköpfe der Verzahnung in einem solchen Fall daher, bspw. durch Schleifen, nachbearbeitet werden. Dies ist zeit- und kostenintensiv.

Es versteht sich, dass selbiges Problem entsprechend auch bei der Herstellung von Außenverzahnungen auftritt.

Es ist daher eine Aufgabe der vorliegenden Erfindung, ein Wälzschälwerkzeug mit verbesserter Schneidkopf-Geometrie bereitzustellen, mit Hilfe derer sich die Bildung einer unerwünschten Störkontur auf den Zahnköpfen der Verzahnung vermeiden lässt.

Diese Aufgabe wird durch ein Wälzschälwerkzeug der eingangs genannten Art dadurch gelöst, dass Flächennormalen in allen Punkten der Übergangsfläche mit den Spanflächen der zwei benachbarten Zähne jeweils einen Winkel größer 0° einschließen.

Die zwischen den stirnseitigen Spanflächen des Schneidkopfes gebildeten Übergangsflächen verlaufen also anders als im Stand der Technik nicht orthogonal zu den benachbarten Spanflächen, sondern schräg dazu. An die Übergangsfläche angelegte Tangenten sind in Bezug auf die benachbarten Spanflächen, also nicht orthogonal ausgerichtet, sondern verlaufen vorzugsweise unter einem spitzen Winkel relativ zu diesen. Dies gilt für jeden Punkt auf den Übergangsflächen, wobei die seitlichen Begrenzungen (Kanten) der Übergangsflächen nicht als zu den Übergangsflächen zugehörig gezählt werden.

Gemäß einer bevorzugten Ausgestaltung schließen sämtliche Flächennormalen in allen Punkten der Übergangsfläche mit den Spanflächen der zwei benachbarten Zähne jeweils einen Winkel größer 10° ein. Dies entspricht also einem Winkel zwischen der Spanfläche und einer Tangen in jedem Punkt der Übergangsfläche, welcher kleiner als 80° ist. Dies gilt für jeden Punkt auf den Übergangsflächen, wobei die seitlichen Begrenzungen (Kanten) der Übergangsflächen nicht als zu den Übergangsflächen zugehörig gezählt werden. Dabei wird als Tangente jeweils die Tangente betrachtet, welche in dem jeweiligen Punkt in Richtung der maximalen Krümmung der Übergangsfläche in diesem Punkt ausgerichtet ist, also die Tangente, die in dem jeweils betrachteten Punkt im Vergleich zu den übrigen Tangenten in diesem Punkt den maximalen Winkel in Bezug auf die benachbarten Spanflächen hat.

Es versteht sich, dass sich die Richtung der Flächennormalen (und damit auch die Richtung der Tangenten) aufgrund der Krümmung der Übergangsfläche typischerweise von Punkt zu Punkt ändert. Nichtsdestotrotz schließen die Flächennormalen erfindungsgemäß in allen Punkten der Übergangsfläche mit den Spanflächen der zwei benachbarten Zähne jeweils einen Winkel größer 0° (nicht einschließlich 0°) ein.

Bei dieser Art der Ausrichtung der zwischen den Spanflächen befindlichen Übergangsflächen lässt sich die Bildung einer Störkontur auf den Zahnköpfen der Verzahnung vermeiden, ohne dass ein vorheriges Innenausdrehen oder eine nachträgliche Nachbearbeitung, wie dies bei Wälzschälwerkzeugen im Stand der Technik der Fall ist, notwendig ist.

Aufgrund der schrägen (nicht orthogonalen) Ausrichtung der Übergangsflächen relativ zu den benachbarten Spanflächen entsteht nämlich kein "harter" treppenförmiger Absatz, wie er in Fig. 8 als Beispiel für ein Wälzschälwerkzeug aus dem Stand der Technik dargestellt ist. Das erfindungsgemäße Wälzschälwerkzeug kann demnach auch unmittelbar für die Bearbeitung der Zahnköpfe der Verzahnung eingesetzt werden. Die oben genannte Aufgabe ist daher vollständig gelöst.

Gemäß einer Ausgestaltung der vorliegenden Erfindung weist die Übergangsfläche zumindest einen konkaven Flächenabschnitt auf. Dieser konkave Flächenabschnitt grenzt vorzugsweise an eine der beiden benachbarten Spanflächen an.

Unter "konkav" wird vorliegend eine nach innen gewölbte Krümmung verstanden. Da der konkave Flächenabschnitt typischerweise durch die Form der Schleifscheibe, welche zur Bearbeitung der Zähne des Schneidkopfes eingesetzt wird, bestimmt wird, sind konkave Flächenabschnitte mit beliebig kleinen Krümmungsradien möglich. Deshalb soll vorliegend ein gekrümmter Flächenabschnitt, der ein Radius von wenigen oder bspw. nur einem Hundertstel aufweist, immer noch als konkaver Flächenabschnitt und nicht als scharfkantig gelten.

Gemäß einer weiteren Ausgestaltung weist die Übergangsfläche einen konvexen Flächenabschnitt auf. Dieser konvexe Flächenabschnitt grenzt vorzugsweise an eine der beiden benachbarten Spanflächen an.

Unter "konvex" wird vorliegend eine nach außen gewölbte Krümmung verstanden. Aus gleichen Gründen wie zuvor bereits in Bezug auf den konkaven Flächenabschnitt erwähnt, ist vorliegend ein konvex gekrümmter Flächenabschnitt mit einem Krümmungsradius von nur einem Hundertstel immer noch als konvex und nicht als scharfkantig zu verstehen.

Gemäß einer weiteren Ausgestaltung weist die Übergangsfläche einen konkaven und einen konvexen Flächenabschnitt auf, wobei der konkave Flächenabschnitt an eine der beiden Spanflächen angrenzt und der konvexe Flächenabschnitt an die andere der beiden benachbarten Spanflächen angrenzt.

Gemäß einer weiteren Ausgestaltung weist die Übergangsfläche einen planaren Flächenabschnitt auf. Dieser planare Flächenabschnitt bildet vorzugsweise den mittleren Bereich der Übergangsfläche, welcher mittig zwischen den beiden benachbarten Spanflächen angeordnet ist. Der planare Flächenabschnitt kann jedoch auch an zumindest eine der beiden benachbarten Spanflächen angrenzen.

Aufgrund der eingangs erwähnten Definition bezüglich der Ausrichtung der Übergangsfläche gilt für die zuvor erwähnten konkaven, konvexen und/oder planaren Flächenabschnitte der Übergangsfläche nach wie vor, dass Flächennormalen in allen Punkten dieser Flächenabschnitte mit den Spanflächen der zwei benachbarten Zähne jeweils einen Winkel größer 0°, vorzugsweise größer 10°, einschließen.

Gemäß einer weiteren Ausgestaltung der vorliegenden Erfindung grenzt der planare Flächenabschnitt unmittelbar an den konkaven Flächenabschnitt an.

Gemäß einer weiteren Ausgestaltung ist der planare Flächenabschnitt zwischen dem konkaven Flächenabschnitt und dem konvexen Flächenabschnitt angeordnet. In diesem Fall bildet der planare Flächenabschnitt den Flächenabschnitt der Übergangsfläche, welcher von beiden benachbarten Spanflächen vorzugsweise den gleichen Abstand hat. Der konkave Flächenabschnitt grenzt vorzugsweise an die eine der beiden benachbarten Spanflächen an. Der konvexe Flächenabschnitt grenzt vorzugsweise an die andere der beiden benachbarten Spanflächen an.

Gemäß einer alternativen Ausgestaltung grenzt der planare Flächenabschnitt unmittelbar an eine der Spanflächen an. In einem solchen Fall bildet sich also zwischen dem planaren Flächenabschnitt und der einen der beiden benachbarten Spanflächen eine scharfkantige Ecke.

Gemäß einer weiteren Ausgestaltung weist die Übergangsfläche einen konkaven und einen konvexen Flächenabschnitt auf, wobei der konkave Flächenabschnitt unmittelbar in den konvexen Flächenabschnitt übergeht.

Vorzugsweise ist die Übergangsfläche gemäß aller zuvor genannter Ausgestaltungen als eine stetige Fläche mit einer sich stetig verändernden Tangentensteigung ausgebildet.

Die Zähne des Schneidkopfes laufen vorzugsweise radial nach außen unter einem spitzen Winkel zu. Sie werden mit radial zunehmendem Abstand von der Längsachse schmäler.

Umfangsseitig weisen die Zähne jeweils eine Flanke auf, die vorzugsweise windschief zu der Längsachse ausgerichtet ist. Die Flanken der Zähne verlaufen also vorzugsweise nicht-parallel zu der Längsachse.

Gemäß einer weiteren Ausgestaltung des Wälzschälwerkzeugs ist der Schneidkopf an dem Schaft lösbar befestigt. In diesem Fall lässt sich der Schneidkopf bei Verschleiß gesamthaft austauschen und durch einen neuen ersetzen. Als Schnittstelle zwischen dem Schneidkopf und dem Schaft kommen diverse Schnittstellen in Betracht. Vorzugsweise weist die Schnittstelle eine Schraubverbindung auf.

Gemäß einer weiteren Ausgestaltung sind die Zähne des Schneidkopfes als Wendeschneidplatten ausgestaltet, welche an dem Schneidkopf lösbar befestigt sind. In diesem Fall lassen sich die Zähne einzeln austauschen.

Ausführungsbeispiele der Erfindung sind in den nachfolgenden Zeichnungen dargestellt und werden in der nachfolgenden Beschreibung näher erläutert. Es zeigen:
- Fig. 1: eine perspektivische Ansicht eines Ausführungsbeispiels des erfindungsgemäßen Wälzschälwerkzeugs;

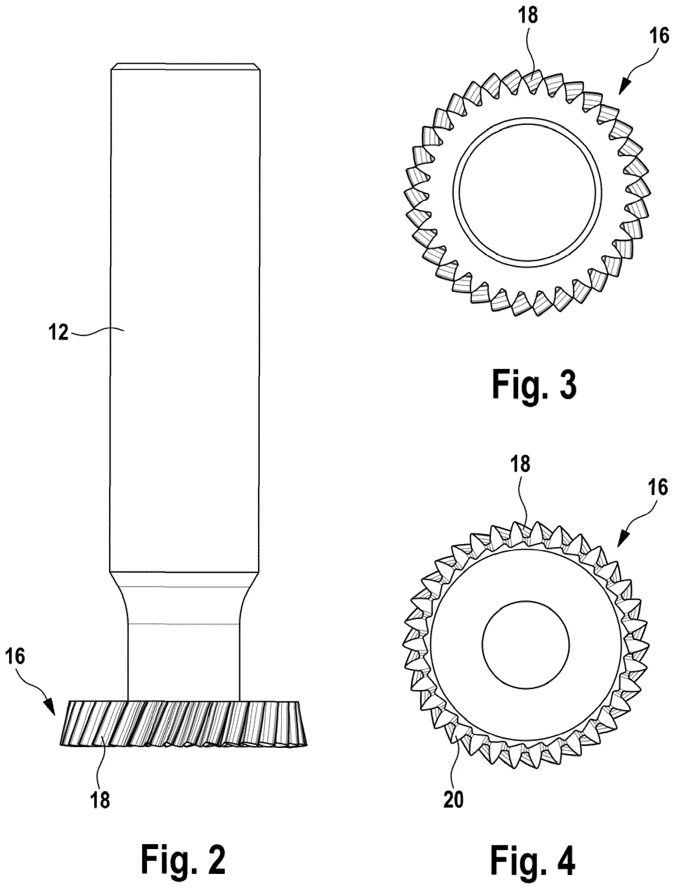

- Fig. 2: eine Seitenansicht des in Fig. 1 gezeigten Wälzschälwerkzeugs;
- Fig. 3: eine Draufsicht von oben auf das in Fig. 2 gezeigte Wälzschälwerkzeug;
- Fig. 4: eine Draufsicht von unten auf das in Fig. 2 gezeigte Wälzschälwerkzeug;
- Fig. 5: eine Detailansicht eines Schneidkopfes des erfindungsgemäßen Wälzschälwerkzeugs gemäß einem ersten Ausführungsbeispiel in einer Draufsicht aus radialer Richtung;
- Fig. 6: eine Detailansicht des Schneidkopfes des erfindungsgemäßen Wälzschälwerkzeugs gemäß einem zweiten Ausführungsbeispiel in einer Draufsicht aus radialer Richtung;
- Fig. 7: eine Detailansicht des Schneidkopfes des erfindungsgemäßen Wälzschälwerkzeugs gemäß einem dritten Ausführungsbeispiel in einer Draufsicht aus radialer Richtung; und
- Fig. 8: eine Detailansicht eines Schneidkopfes eines Wälzschälwerkzeugs aus dem Stand der Technik in einer Draufsicht aus radialer Richtung.

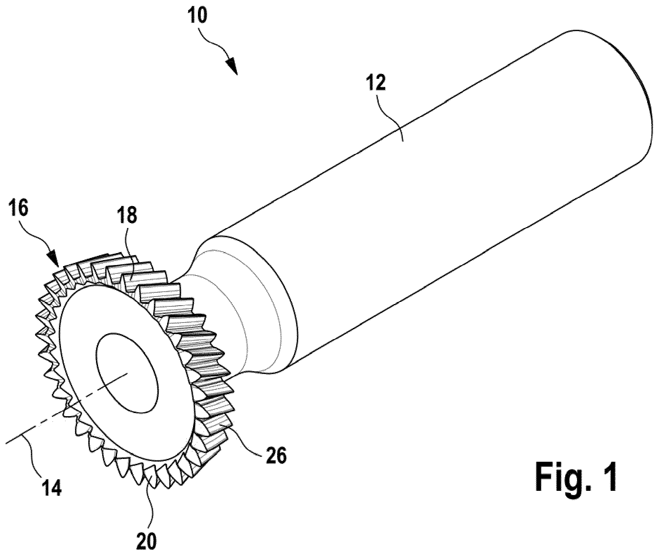

Fig. 1 zeigt eine perspektivische Ansicht eines Ausführungsbeispiels des erfindungsgemäßen Wälzschälwerkzeugs. Das Wälzschälwerkzeug ist darin in seiner Gesamtheit mit der Bezugsziffer 10 gekennzeichnet.

Das erfindungsgemäße Wälzschälwerkzeug 10 weist einen Schaft 12 auf, der sich entlang einer Längsachse 14 erstreckt. In dem gezeigten Ausführungsbeispiel ist der Schaft 12 zylindrisch ausgestaltet. Grundsätzlich kann dieser jedoch auch eine andere Form aufweisen, also bspw. quaderförmig ausgestaltet sein.

Des Weiteren weist das Wälzschälwerkzeug 10 einen Schneidkopf 16 auf, welcher an einem stirnseitigen Ende des Schafts 12 angeordnet ist. An dem Schneidkopf 16 ist eine Vielzahl von Zähnen 18 angeordnet, welche über den Umfang des Schneidkopfes 16 verteilt sind.

Jeder dieser Zähne 18 weist an einem stirnseitigen, dem Schaft 12 abgewandten Ende der Zähne 18 eine Spanfläche 20 auf. Die Zähne 18 laufen radial nach außen unter einem spitzen Winkel zu. Umfangsseitig weist jeder der Zähne 18 eine Flanke 26 auf, welche den radial äußersten Teil jedes Zahnes 18 und damit auch den radial äußersten Teil des Schneidkopfes 16 repräsentiert. In dem vorliegend gezeigten Ausführungsbeispiel verlaufen die Flanken 26 windschief in Bezug auf die Längsachse 14 des Wälzschälwerkzeugs 10 bzw. des Schafts 12.

Die Spanflächen 20 jedes Zahnes 18 sind jeweils in Bezug auf die Längsachse 14 unter einem Winkel ungleich 90° (nicht orthogonal) geneigt. Vorzugsweise weisen die Spanflächen 20 aller Zähne 18 die gleiche Neigung relativ zu der Längsachse 14 auf. Es versteht sich jedoch, dass die Spanflächen 20 aufgrund ihrer sternförmigen Anordnung geometrisch betrachtet nicht parallel zueinander verlaufen. Die Spanflächen 20 zweier benachbarter Zähne 18 verlaufen allerdings annähernd parallel zueinander.

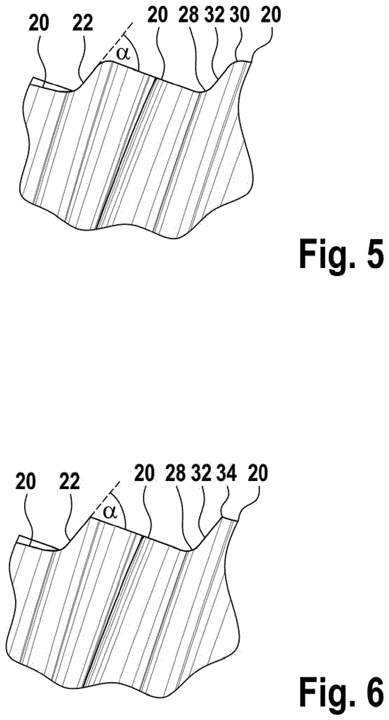

Die Fig. 5-7 zeigen jeweils eine Detailansicht des stirnseitigen Endes des Schneidkopfes 16 in einer Draufsicht aus radialer Richtung. Das stirnseitige Ende der Zähne 18 ist gemäß der drei verschiedenen, in Fig. 5-7 gezeigten Ausführungsbeispiele jeweils etwas anders geformt. Die drei gezeigten Ausführungsbeispiele haben jedoch gemeinsam, dass zwischen den Spanflächen 20 zweier benachbarter Zähne 18 jeweils eine Übergangsfläche 22 angeordnet ist. Diese Übergangsfläche 22 ist relativ zu den benachbarten Spanflächen 20 geneigt.

Die Übergangsflächen 22 sind je nach Ausführungsbeispiel unterschiedlich geformt, worauf nachfolgend noch näher eingegangen wird. Allen gezeigten Ausführungsformen gemeinsam ist, dass eine in den Figuren mit einer gestrichelten Linie angedeutete Tangente an die Übergangsfläche 22 relativ zu der benachbarten Spanfläche 20, welche in einer planaren Ebene liegt, einen Winkel α aufweist, der kleiner als 90°, vorzugsweise kleiner als 80° ist. Dieser Winkel α ist vorzugsweise in allen Punkten der Übergangsfläche 22 kleiner als 90°, besonders bevorzugt kleiner als 80°. Dementsprechend schließen die Flächennormalen, welche jeweils orthogonal zu der Übergangsfläche 22 ausgerichtet sind, einen Winkel β größer 0°, besonders bevorzugt einen Winkel β größer 10° (10° einschließlich) mit den benachbarten Spanflächen ein. In Fig. 5-7 ist die Tangente und die Flächennormal jeweils in einem Punkt eingezeichnet, welcher im Vergleich zu den übrigen Punkten der Übergangsfläche 22 eine maximale Tangentensteigung aufweist. Der Winkel β ist somit je nach Punkt auf der Übergangsfläche 22 im Bereich: 0°< β ≤ 90°, vorzugsweise im Bereich 10°≤ β ≤ 90°.

In dem in Fig. 5 dargestellten ersten Ausführungsbeispiel weist die Übergangsfläche 22 einen konkaven Flächenabschnitt 28, einen konvexen Flächenabschnitt 30 und einen planaren Flächenabschnitt 32 auf. Der konkave Flächenabschnitt 28 der Übergangsfläche 22 grenzt unmittelbar an ein Ende einer der beiden benachbarten Spanflächen 20 an. Der konvexe Flächenabschnitt 30 der Übergangsfläche 22 grenzt unmittelbar an ein Ende der anderen der beiden benachbarten Spanflächen 20 an. Der planare Flächenabschnitt 32 ist zwischen dem konkaven Flächenabschnitt 28 und dem konvexen Flächenabschnitt 30 angeordnet.

Vorzugsweise weist die Übergangsfläche 22 eine sich stetig ändernde Krümmung auf. Der Übergang zwischen dem konkaven Flächenabschnitt 28 und dem planaren Flächenabschnitt 32 ist also ebenso stetig wie der Übergang zwischen dem planaren Flächenabschnitt 32 und dem konvexen Flächenabschnitt 30. Die Übergänge sind vorzugsweise nicht nur stetig, sondern gehen tangential ineinander über. Bei dem in Fig. 5 dargestellten Ausführungsbeispiel gehen auch die Spanflächen 20 vorzugsweise jeweils stetig und tangential in den konkaven Flächenabschnitt 28 bzw. den kovexen Flächenabschnitt 30 über.

Das in Fig. 6 gezeigte Ausführungsbeispiel unterscheidet sich von dem in Fig. 5 gezeigten Ausführungsbeispiel, das anstelle des konvexen Flächenabschnitts 30 zwischen dem planaren Flächenabschnitt 32 und der daran angrenzenden Spanfläche 20 eine Kante (nicht abgerundet) gebildet ist. Hier grenzt also der planare Flächenabschnitt 32 der Übergangsfläche 22 unmittelbar an eine der beiden benachbarten Spanflächen 20 an.

In dem in Fig. 7 dargestellten Ausführungsbeispiel weist die Übergangsfläche 22 keinen planaren Flächenabschnitt 32 auf. Stattdessen geht der konkave Flächenabschnitt 28, der an eine der beiden benachbarten Spanflächen 20 angrenzt, unmittelbar in den konvexen Flächenabschnitt 30 über, der an die andere der beiden benachbarten Spanflächen 20 angrenzt. Der Übergang zwischen dem konkaven Flächenabschnitt 28 und dem konvexen Flächenabschnitt 30 ist vorzugsweise ein stetiger und tangentialer Übergang. In Fig. 7 ist die gestrichelte Linie, welche den zuvor bezeichneten Winkel zwischen der Übergangsfläche 22 und der Spanfläche 20 anzeigt, als Tangente in dem Wendepunkt bzw. der Wendelinie 36 zwischen dem konkaven Flächenabschnitt 28 und dem konvexen Flächenabschnitt 30 angelegt. Dieser Punkt bzw. diese Linie (in 3D) stellt in dem in Fig. 7 gezeigten Ausführungsbeispiel die Stelle maximaler Steigung der Tangente an der Übergangsfläche 22 dar.

Es versteht sich, dass anstelle einer Beschreibung des zuvor genannten Winkels α mit Hilfe einer Tangente an die Übergangsfläche 22 der entsprechende Gegenwinkel auch mit Hilfe der Flächennormale beschrieben werden kann, welche im jeweiligen Punkt senkrecht zu der Übergangsfläche 22 ausgerichtet ist. Der zuvor genannten Bedingung von α < 90° bzw. α < 80° folgend, bedeutet dies also, dass die Flächennormalen in allen Punkte der Übergangsfläche 22 (außer an den Rändern der Übergangsfläche 22) mit den Spanflächen 20 zweier benachbarter Zähne 18 jeweils einen Winkel größer 0°, vorzugsweise größer 10° (10° einschließlich) einschließen. Durch diese Schrägstellung der Übergangsfläche 22 relativ zu den benachbarten Spanflächen 20 lässt sich das Problem einer unerwünschten Ausbildung einer Störkontur an den Zahnköpfen der herzustellenden Verzahnung wirksam vermeiden.

Es versteht sich, dass weitere Ausführungsbeispiele denkbar sind, die sich aus Kombinationen und Permutationen der in Fig. 5-7 gezeigten Anordnungen der einzelnen Flächenabschnitte 28, 30, 32 der Übergangsfläche 22 ergeben, ohne den Rahmen der vorliegenden Erfindung zu verlassen.

## Patentansprüche

1. Wälzschälwerkzeug (10), mit einem Schaft (12), der sich entlang einer Längsachse (14) des Werkzeugs (10) erstreckt, und einem Schneidkopf (16), der an einem stirnseitigen Ende des Schafts (12) angeordnet ist, wobei der Schneidkopf (16) eine Vielzahl von umfangsseitig angeordneten Zähnen (18) aufweist, wobei jeder dieser Zähne (18) an einem stirnseitigen, dem Schaft (12) abgewandten Ende des Schneidkopfes (16) eine planare Spanfläche (20) aufweist, die in Bezug auf die Längsachse (14) unter einem Winkel ungleich 90° geneigt ist, wobei zwischen den Spanflächen (20) zweier benachbarter Zähne (18) jeweils eine Übergangsfläche (22) angeordnet ist, die ebenfalls an dem stirnseitigen Ende des Schneidkopfes (16) angeordnet ist und unmittelbar an die Spanflächen (20) der zwei benachbarten Zähne (18) angrenzt,
**dadurch gekennzeichnet, dass** Flächennormalen in allen Punkten der Übergangsfläche (22) mit den Spanflächen (20) der zwei benachbarten Zähne (18) jeweils einen Winkel (β) größer 0° einschließen.

2. Wälzschälwerkzeug gemäß Anspruch 1, wobei sämtliche Flächennormalen in allen Punkte der Übergangsfläche (22) mit den Spanflächen (20) der zwei benachbarten Zähne (18) jeweils einen Winkel (β) größer 10° einschließen.

3. Wälzschälwerkzeug gemäß Anspruch 1 oder 2, wobei die Übergangsfläche (22) zumindest einen konkaven Flächenabschnitt (28) aufweist.

4. Wälzschälwerkzeug gemäß einem der vorhergehenden Ansprüche, wobei die Übergangsfläche (22) einen konvexen Flächenabschnitt (30) aufweist.

5. Wälzschälwerkzeug gemäß einem der vorhergehenden Ansprüche, wobei die Übergangsfläche einen planaren Flächenabschnitt (32) aufweist.

6. Wälzschälwerkzeug gemäß den Ansprüchen 3 und 5, wobei der planare Flächenabschnitt (28) unmittelbar an den konkaven Flächenabschnitt (28) angrenzt.

7. Wälzschälwerkzeug gemäß den Ansprüchen 3, 4 und 5, wobei der planare Flächenabschnitt (32) zwischen dem konkaven Flächenabschnitt (28) und dem konvexen Flächenabschnitt (30) angeordnet ist.

8. Wälzschälwerkzeug gemäß Anspruch 7, wobei der konkave Flächenabschnitt (28) an die Spanfläche (20) einer der beiden benachbarten Zähne (18) angrenzt und der konvexe Flächenabschnitt (30) an die Spanfläche (20) des anderen der beiden benachbarten Zähne (18) angrenzt

9. Wälzschälwerkzeug gemäß Anspruch 5 oder 6, wobei der planare Flächenabschnitt (32) unmittelbar an eine der Spanflächen (20) der zwei benachbarten Zähne (18) angrenzt.

10. Wälzschälwerkzeug gemäß Anspruch 1, wobei die Übergangsfläche (22) einen konkaven und einen konvexen Flächenabschnitt (28, 30) aufweist, wobei der konkave Flächenabschnitt (28) an die Spanfläche (20) einer der beiden benachbarten Zähne (18) angrenzt und der konvexe Flächenabschnitt (30) an die Spanfläche (20) des anderen der beiden benachbarten Zähne (18) angrenzt.

11. Wälzschälwerkzeug gemäß Anspruch 10, wobei der konkave Flächenabschnitt (28) unmittelbar in den konvexen Flächenabschnitt (32) übergeht.

12. Wälzschälwerkzeug gemäß einem der vorhergehenden Ansprüche, wobei die Zähne (18) radial nach außen unter einem spitzen Winkel zulaufen.

13. Wälzschälwerkzeug gemäß einem der vorhergehenden Ansprüche, wobei die Zähne (18) jeweils eine umfangsseitig angeordnete Flanke (26) aufweisen, die windschief zu der Längsachse (14) ausgerichtet ist.

14. Wälzschälwerkzeug gemäß einem der vorhergehenden Ansprüche, wobei der Schneidkopf (16) an dem Schaft (12) lösbar befestigt ist.

15. Wälzschälwerkzeug gemäß einem der vorhergehenden Ansprüche, wobei der Schaft (12) aus Stahl und die Zähne (18) des Schneidkopfes (16) aus Hartmetall sind.

## Claims

1. A power skiving tool (10), having a shank (12) extending along a longitudinal axis (14) of the tool (10) and a cutting head (16) arranged at a front end of the shank (12), wherein the cutting head (16) comprises a plurality of circumferentially arranged teeth (18), wherein each of these teeth (18) comprises a planar rake face (20) at a front end of the cutting head (16) that faces away from the shank (12), wherein the rake face (20) is inclined at an angle other than 90° with respect to the longitudinal axis (14), wherein a transition face (22) is in each case arranged between the rake faces (20) of two adjacent teeth (18), which transition face (22) is also arranged at the front end of the cutting head (16) and directly adjoins the rake faces (20) of the two adjacent teeth (18),
**characterized in that** surface normals in all points of the transition face (22) form an angle (β) greater than 0° with the rake faces (20) of the two adjacent teeth (18).

2. The power skiving tool according to claim 1, wherein the surface normals in all points of the transition face (22) form an angle (β) greater than 10° with the rake faces (20) of the two adjacent teeth (18).

3. The power skiving tool according to claim 1 or 2, wherein the transition face (22) comprises at least one concave surface section (28).

4. The power skiving tool according to one of the preceding claims, wherein the transition face (22) comprises a convex surface section (30).

5. The power skiving tool according to one of the preceding claims, wherein the transition face comprises a planar surface section (32).

6. The power skiving tool according to claims 3 and 5, wherein the planar surface section (28) directly adjoins the concave surface section (28).

7. The power skiving tool according to claims 3, 4 and 5, wherein the planar surface section (32) is arranged between the concave surface section (28) and the convex surface section (30).

8. The power skiving tool according to claim 7, wherein the concave surface section (28) adjoins the rake face (20) of one of the two adjacent teeth (18) and the convex surface section (30) adjoins the rake face (20) of the other one of the two adjacent teeth (18).

9. The power skiving tool according to claim 5 or 6, wherein the planar surface section (32) directly adjoins one of the rake faces (20) of the two adjacent teeth (18).

10. The power skiving tool according to claim 1, wherein the transition face (22) comprises a concave surface section (28) and a convex surface section (30), wherein the concave surface section (28) adjoins the rake face (20) of one of the two adjacent teeth (18) and the convex surface section (30) adjoins the rake face (20) of the other one of the two adjacent teeth (18).

11. The power skiving tool according to claim 10, wherein the concave surface section (28) merges directly into the convex surface section (32).

12. The power skiving tool according to one of the preceding claims, wherein the teeth (18) taper radially outwards at an acute angle.

13. The power skiving tool according to one of the preceding claims, wherein each of the teeth (18) comprises a circumferentially arranged flank (26) that is oriented skew to the longitudinal axis (14).

14. The power skiving tool according to one of the preceding claims, wherein the cutting head (16) is releasably attached to the shank (12).

15. The power skiving tool according to one of the preceding claims, wherein the shank (12) is made of steel and the teeth (18) of the cutting head (16) are made of carbide.

## Revendications

1. Outil de taillage en développante (10), comportant une tige (12) qui s'étend le long d'un axe longitudinal (14) de l'outil (10), et comportant une tête de coupe (16) qui est disposée à une extrémité frontale de la tige (12), la tête de coupe (16) présentant une pluralité de dents (18) disposées du côté périphérique, chacune de ces dents (18) présentant, à une extrémité frontale, opposée à la tige (12), de la tête de coupe (16), une face de coupe (20) plane qui est inclinée suivant un angle différent de 90° par rapport à l'axe longitudinal (14), une face de transition (22) étant disposée respectivement entre les faces de coupe (20) de deux dents (18) adjacentes, laquelle face de coupe est disposée également à l'extrémité frontale de la tête de coupe (16) et est immédiatement adjacente aux faces de coupe (20) des deux dents (18) adjacentes,
**caractérisé en ce que** les normales à la surface en tous les points de la face de transition (22) forment avec les faces de coupe (20) des deux dents (18) adjacentes respectivement un angle (β) supérieur à 0°.

2. Outil de taillage en développante selon la revendication 1, toutes les normales à la surface en tous les points de la face de transition (22) formant avec les faces de coupe (20) des deux dents (18) adjacentes respectivement un angle (β) supérieur à 10°.

3. Outil de taillage en développante selon la revendication 1 ou 2, la face de transition (22) présentant au moins une partie de face (28) concave.

4. Outil de taillage en développante selon l'une des revendications précédentes, la face de transition (22) présentant une partie de face (30) convexe.

5. Outil de taillage en développante selon l'une des revendications précédentes, la face de transition présentant une partie de face (32) plane.

6. Outil de taillage en développante selon les revendications 3 et 5, la partie de face (28) plane étant immédiatement adjacente à la partie de face (28) concave.

7. Outil de taillage en développante selon les revendications 3, 4 et 5, la partie de face (32) plane étant disposée entre la partie de face (28) concave et la partie de face (30) convexe.

8. Outil de taillage en développante selon la revendication 7, la partie de face (28) concave étant adjacente à la face de coupe (20) de l'une des deux dents (18) adjacentes et la partie de face (30) convexe étant adjacente à la face de coupe (20) de l'autre des deux dents (18) adjacentes.

9. Outil de taillage en développante selon la revendication 5 ou 6, la partie de face (32) plane étant immédiatement adjacente à l'une des faces de coupe (20) des deux dents (18) adjacentes.

10. Outil de taillage en développante selon la revendication 1, la face de transition (22) présentant une partie de face concave et une partie de face convexe (28, 30), la partie de face (28) concave étant adjacente à la face de coupe (20) de l'une des deux dents (18) adjacentes et la partie de face (30) convexe étant adjacente à la face de coupe (20) de l'autre des deux dents (18) adjacentes.

11. Outil de taillage en développante selon la revendication 10, la partie de face (28) concave se prolongeant immédiatement dans la partie de face (32) convexe.

12. Outil de taillage en développante selon l'une des revendications précédentes, les dents (18) s'effilant suivant un angle aigu radialement vers l'extérieur.

13. Outil de taillage en développante selon l'une des revendications précédentes, les dents (18) présentant respectivement un flanc (26) disposé du côté périphérique, lequel flanc est orienté de manière oblique par rapport à l'axe longitudinal (14).

14. Outil de taillage en développante selon l'une des revendications précédentes, la tête de coupe (16) étant fixée de manière amovible à la tige (12).

15. Outil de taillage en développante selon l'une des revendications précédentes, la tige (12) étant en acier et les dents (18) de la tête de coupe (16) étant en métal dur.
